Europäisches Patentamt

European Patent Office

Office européen des brevets

(11) Publication number: **0 402 992**
**A1**

# EUROPEAN PATENT APPLICATION

(21) Application number: **90201457.0**

(22) Date of filing: **07.06.90**

(51) Int. Cl.⁵: **H04N 7/087, H04N 7/093**

(30) Priority: **13.06.89 NL 8901492**

(43) Date of publication of application:
**19.12.90 Bulletin 90/51**

(84) Designated Contracting States:
**DE FR GB IT NL SE**

(71) Applicant: **N.V. Philips' Gloeilampenfabrieken**
**Groenewoudseweg 1**
**NL-5621 BA Eindhoven(NL)**

(72) Inventor: **Spiero, Richard Cees**
**c/o Int. OCTROOIBUREAU B.V., Prof.**
**Holstlaan 6**
**NL-5656 AA Eindhoven(NL)**

(74) Representative: **Kooiman, Josephus Johannes**
**Antonius et al**
**INTERNATIONAAL OCTROOIBUREAU B.V.**
**Prof. Holstlaan 6**
**NL-5656 AA Eindhoven(NL)**

(54) Transmission system for transmitting a video signal with an identification signal, transmitter for generating the video signal, and picture display device for receiving and displaying the video signal.

(57) A transmission system for a video signal, a transmitter and a picture display device which form part of such a system. An identification signal is added to the video signal when the aspect ratio of the picture to be displayed has a value which is higher than the value in accordance with the current standard. For this purpose two additional edges occur between the edges of line synchronizing pulses, preferably a limited number of these pulses during the field blanking interval.

FIG.1

EP 0 402 992 A1

**Transmission system for transmitting a video signal with an identification signal, transmitter for generating the video signal, and picture display device for receiving and displaying the video signal.**

The invention relates to a transmission system for transmitting a video signal comprising picture signals and line and field synchronizing signals, with at least one transmitter for generating the video signal and at least one picture display device for receiving and displaying the video signal, the transmitter having a circuit by means of which an identification signal having two additional pulse edges between the edges of line synchronizing pulses is added to the video signal, the picture display device having an identification circuit for recognizing the identification signal and for switching of circuits.

A transmission system of this type is known from Netherlands Patent Application 7409514 (PHN 7640) in which line synchronizing pulses are encoded, inter alia , in the manner described when the video signal originates from a video storage device, so that a distinction can be made between the signal of such a device and that of a transmitter.

An object of the invention is to use such an encoding method for a completely different purpose and to this end the transmission system according to the invention is characterized in that the video signal is suitable for displaying a picture having two possible predetermined aspect ratio values, the identification signal being present for the highest of said values and not for the other value.

The invention is based on the recognition that the known system, which was intended as a standard for recognizing signals of video storage devices, has never been used so that there are no transmitters or picture display devices comprising these circuits for generating or processing the identification signal, which provides the possibility of using these useful circuits for a novel purpose. These circuits are very simple and inexpensive. The disturbance which is caused by the identification signal in existing video recorders and television receivers is very small. The measure according to the invention has the additional advantage that the video signal obtained can be stored without any problem in existing video recorders so that these apparatuses need not be modified.

The transmission system according to the invention is advantageously characterized in that the identification signal is added to a predetermined number of line synchronizing pulses. As a result, the above-mentioned disturbance is kept very small. The visibility of this disturbance is further reduced if the identification signal is each time present during the field blanking interval.

The invention also relates to a transmitter for generating a video signal comprising picture signals and line and field synchronizing signals, provided with a circuit by means of which an identification signal having two additional pulse edges between the edges of line synchronizing pulses is added to the video signal. The device is characterized in that the video signal generated thereby is suitable for displaying a picture having two possible predetermined aspect ratio values, the identification signal being present for the highest of said values and not for the other value.

The invention also relates to a picture display device for receiving and displaying a video signal comprising picture signals and line and field synchronizing signals, provided with an identification circuit for recognizing an identification signal which is added to the video signal and has two additional pulse edges between the edges of line synchronizing pulses, and for switching of circuits. The device is characterized in that it is suitable for displaying a picture having two possible predetermined aspect ratio values, the identification circuit being adapted to switch to the highest aspect ratio of the displayed picture in the presence of the identification signal and to the other aspect ratio in the absence of said signal.

The invention will now be described in greater detail by way of example with reference to the accompanying drawing in which

Fig. 1 shows line synchronizing pulses with the identification signal and

Fig. 2 is a circuit diagram of a transmission system with a transmitter and a picture display device according to the invention.

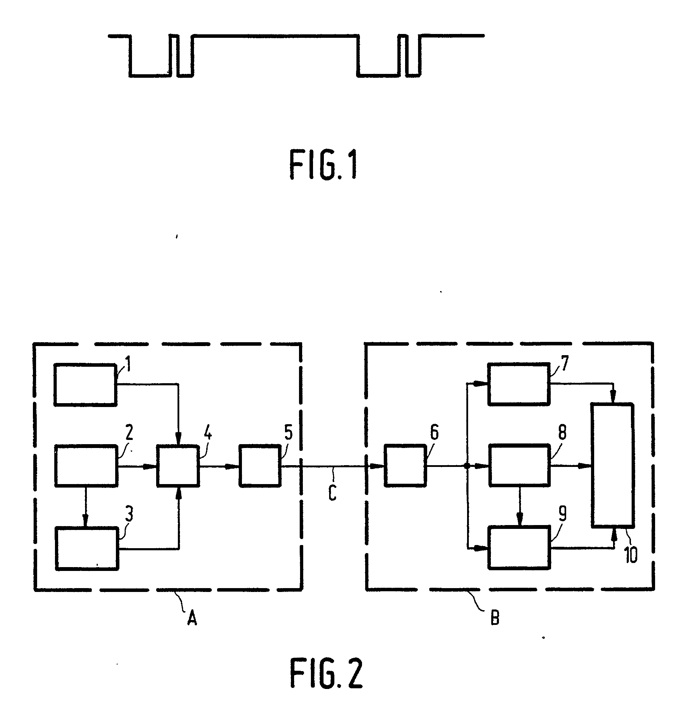

Fig. 1 shows some line synchronizing pulses which are modified in one of the manners described in Netherlands Patent Application 7409514. As compared with the line synchronizing pulses in accordance with the conventional television standards, the pulses of Fig. 1 show an identification signal having two additional pulse edges between the edges of the original pulses. An original pulse which has, for example, a period of 4.7 $\mu$s in accordance with the European standard, is thus divided into two discrete pulses, in which the interval between the aditional edges having a duration of, for example 0.5 $\mu$s.

Fig. 2 shows a transmission system for transmitting a video signal. In this Figure the reference A denotes a transmitter, for example an encoder, with a picture section 1 in which picture signals are generated in known manner. Synchronizing signals are generated in 2 and an identification signal according to Fig. 1 is generated in 3. Circuit 3 may have the form of the circuit described in the above-mentioned Netherlands Patent Application. The signals obtained are combined by means of a stage 4 whose output signal is a video signal which is applied to an output stage 5 in which this signal is processed in known manner. The signal obtained is the output signal of transmitter A. It is supplied to a picture display device B via an intermediate medium C, for example a cable.

Device B, for example, a television receiver comprises a receiver section 6 in which the incoming video signal is received and processed in known manner. The signal obtained is applied to a picture section 7, to a synchronizing circuit 8 and to an identification circuit 9. The output signals of elements 7, 8 and 9 are applied to a display section 10 for displaying the picture signals in known manner.

The video signal generated by transmitter A is suitable for displaying a picture with two possible aspect ratio values, for example, the value of 4 : 3 prescribed by the current standards and a higher value, for example, the value 16 : 9 which has been proposed for high-resolution television systems. The video signal comprises the identification signal according to Fig. 1 for this higher value and the video signal does not comprise the identification signal for the standard value. The picture display device B is adapted in known manner to display a picture with both aspect ratio values and the identification circuit 9 is adapted to recognize the identification signal and to switch the relevant parts in device B, particularly the deflection circuits which are present in section 10, to the value 16 : 9 in the presence of the identification signal. In the opposite case the displayed picture has an aspect ratio of 4 : 3. Circuit 9 may be of the form as described in the above-mentioned Netherlands Patent Application.

As is known, the identification signal produces a very small disturbance in the displayed picture. This disturbance can be reduced in that the identification signal is added to a limited number of line synchronizing pulses, namely just before the trailing edge of these pulses. The disturbance can even be further reduced because these pulses occur during the field blanking interval, i.e. in an invisible part of the video signal. In one embodiment an number of lines are chosen for this interval for this purpose, namely the lines 7-11 in the first field and the lines 319-323 in the second field. In this case the circuits 3 and 9 in Fig. 2 have the required line and field frequency provisions for selecting these lines from the generated and the incoming line synchronizing signal, respectively. Circuit 9 determines for each field whether the identification signal is present or not.

## Claims

1. A transmission system for transmitting a video signal comprising picture signals and line and field synchronizing signals, with at least one transmitter for generating the video signal and at least one picture display device for receiving and displaying the video signal, the transmitter having a circuit by means of which an identification signal having two additional pulse edges between the edges of lines synchronizing pulses is added to the video signal, the picture display device having an identification circuit for recognizing the identification signal and for switching of circuits, characterized in that the video signal is suitable for displaying a picture having two possible predetermined aspect ratio values, the identification signal being present for the highest of said values and not for the other value.

2. A system as claimed in Claim 1, characterized in that the identification signal is added to a predetermined number of line synchronizing pulses.

3. A system as claimed in Claim 2, characterized in that the identification signal is each time present during the field blanking interval.

4. A system as claimed in Claim 3, characterized in that the identification signal is present during the lines 7-11 in the first field and the lines 319-323 in the second field.

5. A transmitter for generating a video signal comprising picture signals and line and field synchronizing signals, provided with a circuit by means of which an identification signal having two additional pulse edges between the edges of line synchronizing pulses is added to the video signal, characterized in that the video signal generated by the device is suitable for displaying a picture having two possible predetermined aspect ratio values, the identification signal being present for the highest of said values and not for the other value.

6. A transmitter as claimed in Claim 5, characterized in that the identification signal is added to a predetermined number of line synchronizing pulses.

7. A transmitter as claimed in Claim 6, characterized in that the identification signal is each time present during the field blanking interval.

8. A transmitter as claimed in Claim 7, characterized in that the identification signal is present during the lines 7-11 in the first field and the lines 319-323 in the second field.

9. A picture display device for receiving and displaying a video signal comprising picture signals and line and field synchronizing signals, provided with an identification circuit for recognizing an identification signal which is added to the video signal and has two additional pulse edges between the edges of line synchronizing pulses, and for switching of circuits, characterized in that the device is suitable for displaying a picture having two possible predetermined aspect ratio values, the identification circuit being adapted to switch to the highest aspect ratio of the displayed picture in the presence of the identification signal and to the other aspect ratio in the absence of said signal.

10. A picture display device as claimed in Claim 9, characterized in that the identification circuit is adapted to select a predetermined number of line synchronizing pulses.

11. A picture display device as claimed in Claim 10, characterized in that the identification circuit is adapted to select a predetermined number of line synchronizing pulses during the field blanking interval.

12. A picture display device as claimed in Claim 11, characterized in that the identification circuit is adapted to select the line synchronizing pulses which are associated with the lines 7-11 in the first field and the lines 319-323 in the second field.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 276 985 (FERGUSON LTD) <br> * Column 1, line 1 - column 4, line 15 * | 1,2,5,6 ,9,10 | H 04 N 7/087 <br> H 04 N 7/093 |
| Y | US-A-4 112 445 (STEINKOPF) <br> * Column 2, line 21 - column 4, line 29 <br> * & NL-A-7 409 514 (PHILIPS GLOEILAMPENFABRIEKEN N.V.) (Cat. D) | 1,2,5,6 ,9,10 | |
| A | PATENT ABSTRACTS OF JAPAN, vol. 12, no. 375 (E-666), 7th October 1988; & JP-A-63 123 287 (MATSUSHITA ELECTRIC INDUSTRIAL CO., LTD) 27-05-1988 <br> * Wholly * | 1-12 | |
| A | GB-A-2 173 669, (THE GRASS VALLEY GROUP) <br> * Page 6, line 18 - page 7, line 103 * | 1,5,9 | |
| A | WO-A-8 605 644 (SCIENTIFIC ATLANTA INC.) <br> * Page 9, line 18 - page 10, line 4 * | 1-12 | TECHNICAL FIELDS SEARCHED (Int. Cl.5) |
| A | PATENT ABSTRACTS OF JAPAN, vol. 12, no. 412 (E-676), 27th October 1988; & JP-A-63 148 788 (NEC CORP.) 21-06-1988 | | H 04 N |
| A,D | US-A-4 051 526 (STEINKOPF) <br> & NL-A-7 409 514 (PHILIPS GLOEILAMPENFABRIEKEN N.V.) (Cat. D) | | |

The present search report has been drawn up for all claims

| Place of search | Date of completion of the search | Examiner |
|---|---|---|
| THE HAGUE | 16-09-1990 | VERSCHELDEN J. |

EPO FORM 1503 03.82 (P0401)